# EUROPÄISCHE PATENTANMELDUNG

(11) **EP 3 617 976 A1**
(43) Veröffentlichungstag der Anmeldung: **04.03.2020**
(21) Anmeldenummer: 18191960.6
(22) Anmeldetag: 31.08.2018
(51) Int. Cl.: G06Q 20/22, G06Q 20/38, G06Q 20/02, G06Q 20/40

(54) **VERFAHREN ZUM BETREIBEN EINES VERTEILTEN DATENBANKSYSTEMS, VERTEILTES DATENBANKSYSTEM UND INDUSTRIEAUTOMATISIERUNGSSYSTEM**

(71) Anmelder: Siemens Aktiengesellschaft, 80333 München (DE)
(72) Erfinder: Dichtl, Markus, 80636 München (DE)

(57) **Zusammenfassung**

Bei einem Verfahren zum Betreiben eines verteilten Datenbanksystems (1) mit verteilten Knoten-Einrichtungen (2 - 6) zum Bereitstellen von miteinander verknüpften Datenblöcken (Bi), insbesondere in der Art einer Blockkette (BC), welche Transaktionen zwischen Teilnehmern (8) dokumentieren, wobei Transaktionen (TD) zwischen Teilnehmern (8) mit Hilfe von Blockketten-Identifizierungsdaten (BID) durchgeführt werden, werden die Schritte durchgeführt: Zuweisen (S1) eines Blockketten-Identifizierungsdatums (BID) an einen Teilnehmer (8); Zuweisen (S2) eines digitalen Signaturschlüssels (SK) an den Teilnehmer (8); digitales Signieren (S3) des dem Teilnehmer zugewiesenen Blockketten-Identifizierungsdatums (BID) mit Hilfe des dem Teilnehmer (8) zugewiesenen digitalen Signaturschlüssels (SK) zum Erzeugen eines digital signierten Blockketten-Identifizierungsdatums (DSBID); und Durchführen von Transaktionen (S4) zwischen Teilnehmern (8)mit Hilfe von digital signierten Blockketten-Identifizierungsdaten (DSBID).

Mit Hilfe der vorgeschlagenen Signatur von Blockketten-Identitäten können Teilnehmer besser identifiziert werden. Verträge lassen sich rechtssicher verteilt abgespeichert dokumentieren.

## Beschreibung

Die vorliegende Erfindung betrifft ein Verfahren zum Betreiben eines verteilten Datenbanksystems, wie zum Beispiel einer Blockkette (Blockchain) mit Hilfe vernetzter Knoten-Einrichtungen. Ein solches Datenbanksystem eignet sich insbesondere zum Einsatz in einem Industrieautomatisierungsnetzwerk. Um Transaktionen innerhalb einer Blockkette durchführen und dokumentieren zu können, werden Teilnehmern in der Regel Adressen oder Blockketten-Identifizierungsdaten zugewiesen.

Es ist bei bestimmten Anwendungen von verteilten Datenbanksystemen wünschenswert, die Identität der Teilnehmer, die im Rahmen des Datenbanksystems durch ihre zugewiesenen Blockketten-Identifizierungsdaten benannt werden, auch außerhalb der "Datenbankwelt" zuverlässig zu erkennen. Dies ist insbesondere bei realen oder juristischen Personen als Teilnehmer erwünscht, wenn mit Hilfe der jeweiligen verteilten Datenbank den Personen zugeordnete Informationen gespeichert oder verwaltet werden.

Vor diesem Hintergrund besteht eine Aufgabe der vorliegenden Erfindung darin, einen verbesserten Betrieb von verteilten Datenbanksystemen, insbesondere von Blockketten, zu ermöglichen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Daher wird ein Verfahren zum Betreiben eines verteilten Datenbanksystems vorgeschlagen, welches verteilte Knoten-Einrichtungen zum Bereitstellen von miteinander verknüpften Datenblöcken umfasst. Die Datenblöcke dokumentieren Transaktionen zwischen Teilnehmern, wobei Transaktionen zwischen Teilnehmern mit Hilfe von Blockketten-Identifizierungsdaten durchgeführt werden. Das Verfahren umfasst die Schritte:
Zuweisen eines Blockketten-Identifizierungsdatums an einen Teilnehmer;
Zuweisen eines digitalen Signaturschlüssels an den Teilnehmer;
digitales Signieren des dem Teilnehmer zugewiesenen Blockketten-Identifizierungsdatums mit Hilfe eines dem Teilnehmer zugewiesenen digitalen Signaturschlüssels zum Erzeugen eines digital signierten Blockketten-Identifizierungsdatums; und
Durchführen von Transaktionen zwischen Teilnehmern mit Hilfe von digital signierten Blockketten-Identifizierungsdaten.

Mit Hilfe des einem Teilnehmer zugewiesenen digitalen Signaturschlüssels lässt sich die Identität des Teilnehmers verifizieren. Unter einem Teilnehmer kann beispielsweise eine reale oder juristische Person oder Entität verstanden werden, die an sie gebundene oder auf sie bezogenen Daten in dem verteilten Datenbanksystem abspeichern möchte oder abgespeichert werden. Anstelle eines sonst üblichen Pseudonyms in der Art des Blockketten-Identifizierungsdatums bzw. einer "Blockkettenidentität" werden bei dem vorgeschlagenen Verfahren nur digital signierte Blockketten-Identifizierungsdaten verwendet, um Transaktionen vorzunehmen. Als Blockketten-Identifizierungsdatum kommt häufig die Adresse eines von einem Teilnehmer verwendeten Gerätes infrage.

Obwohl der Begriff "Blockketten-Identifizierungsdatum" benutzt wird, muss das verteilte Datenbanksystem nicht zwangsläufig in der Art einer Blockkette betrieben werden. Man kann allgemein von verteilten Knoten-Einrichtungen sprechen, die ein sogenanntes verteiltes Kontenbuch (Distributed Ledger) schaffen. Eine Transaktion kann beispielsweise darin bestehen, Daten, die an eine Blockkettenidentität gebunden sind, zu verändern.

In Ausführungsformen erfolgt ein Betrieb über die oben genannten Schritte hinaus gemäß einem bekannten Blockketten-Algorithmus. Denkbar sind zum Beispiel Ethereum-, IOTA- oder Bitcoin-Abwandlungen.

Ein jeweiliges Blockketten-Identifizierungsdatum identifiziert einen Teilnehmer innerhalb der Blockkette, insbesondere eindeutig. Dieses eindeutige Blockketten-Identifizierungsdatum wird insbesondere mit Hilfe eines anerkannten digitalen Signaturverfahrens unter Verwendung eines privaten Schlüssels, dessen Bindung an den jeweiligen Teilnehmer anerkannt ist, signiert. Dazu können Zertifizierungsstellen zum Ausgeben von digitalen Signaturschlüsseln oder digitalen Zertifikaten bereitgestellt werden.

In Ausführungsformen entsprechen die digitale Signatur und/oder der jeweilige digitale Signaturschlüssel bzw. private Schlüssel, der einem Teilnehmer zugewiesen ist, dem Vertrauensdienstegesetz in der jeweils aktuellen Fassung oder der Fassung des Anmeldetages dieser Anmeldung. Dadurch kann die eingesetzte digitale Signatur rechtsverbindlich eingesetzt werden.

In Ausführungsformen des Verfahrens wird der Schritt durchgeführt: für mehrere Teilnehmer, digitales Signieren der den jeweiligen Teilnehmern zugewiesenen jeweiligen Blockketten-Identifizierungsdaten der jeweiligen Teilnehmer unter Anwendung der jeweiligen den Teilnehmern zugewiesenen Signaturschlüssel.

Es ist insofern möglich, dass Teilnehmer, welche das verteilte Datenbanksystem zum Speichern oder Dokumentieren von Transaktionen, die ihre Identität betreffen, nutzen wollen, zunächst digital signierte Blockketten-Identifizierungsdaten erzeugen.

In Ausführungsformen müssen alle Teilnehmer mit digital signierten Blockketten-Identifizierungsdaten ausgestattet sein. Insofern werden dann lediglich Transaktionen innerhalb der verteilten Datenbank durchgeführt, wenn die beteiligten Blockketten-Identifizierungsdaten digital signiert sind. Man kann auch sagen, es werden nur solche angefragten Transaktionen von Knoten-Einrichtungen bestätigt, die sich auf digital signierte Blockkettenidentitäten beziehen. Man kann sagen, dass in einer Variante des Verfahrens das Durchführen von Transaktionen zwischen Teilnehmern ausschließlich mit Hilfe von digital signierten Blockketten-Identifizierungsdaten erfolgt.

In Ausführungsformen des Verfahrens werden digital signierte Blockketten-Identifizierungsdaten innerhalb der verteilten Datenbank mithilfe der Knoten-Einrichtungen abgespeichert. Denkbar ist beispielsweise ein Abspeichern von digital signierten Blockketten-Identifizierungsdaten durch eine Blockkette. Eine beispielsweise durch eine bestätigte Transaktion innerhalb des verteilten Datenbanksystems getätigter Eintrag kann z. B. lauten, dass die Identität BID innerhalb einer Blockkette BC zum Teilnehmer T gehört. In signierter Form können diese Informationen in der Blockkette BC vorgehalten werden. Denkbar sind auch Speicherorte abseits der Blockkette oder des verteilten Datenbanksystems.

In Ausführungsformen werden die Blockketten-Identifizierungsdaten von einem öffentlichen kryptographischen Schlüssel abgeleitet.

In Ausführungsformen umfasst das Durchführen von Transaktionen für einen Teilnehmer:
Prüfen der digitalen Signatur des digital signierten Blockketten-Identifizierungsdatums mithilfe eines Zertifikats; und
Bestätigen der Transaktion, falls die digitale Signatur als gültig erkannt wird und falls die Transaktion mit einer Transaktionshistorie einer Blockkette widerspruchsfrei ist.

In Ausführungsformen wird die Blockkette als Proof-of-Work-Blockkette betrieben. Bei der Proof-of-Work-Blockkette müssen die Teilnehmer, welche innerhalb der Blockkette durch ihre Blockketten-Identifizierungsdaten identifiziert sind, sich nicht gegenseitig vertrauen. Bei der Bestätigung von Transaktionen durch Knoten-Einrichtungen sind keine Zugangsbeschränkungen für diese Knoten-Einrichtungen zu der Blockkette notwendig. Der eingesetzte Blockkettenalgorithmus erfordert dann insbesondere keinen Proof-of-Stake-Mechanismus, der Transaktionsteilnehmer muss keine bestimmte Berechtigung zur Teilnahme an der Blockkette nachweisen.

Es wird ferner ein verteiltes Datenbanksystem vorgeschlagen, welches mehrere Knoten-Einrichtungen zum Bereitstellen von miteinander verknüpften Datenblöcken umfasst, welche insbesondere in der Art einer Blockkette verknüpft sind. Jede Knoten-Einrichtung ist eingerichtet, gemäß einem vorgegebenen Blockkettenalgorithmus Transaktionen zwischen Teilnehmern zu dokumentieren, wobei der Blockkettenalgorithmus die Durchführung eines zuvor und im Folgenden beschriebenen Verfahrens durch die Knoten-Einrichtungen veranlasst.

Es wird insbesondere eine Knoten-Einrichtung vorgeschlagen, welche derart eingerichtet ist, dass sie als Knoten-Einrichtung in einem verteilten Datenbanksystem einsetzbar ist und gemäß dem Blockketten-Algorithmus arbeitet, wie es zuvor und im Folgenden beschrieben wird.

Weiterhin wird ein Industrie-Automatisierungsnetzwerk mit einem verteilten Datenbanksystem wie zuvor und im Folgenden beschrieben vorgeschlagen, wobei das Datenbanksystem zum Dokumentieren und Steuern von Transaktionen für Feldgeräte in dem Automatisierungsnetzwerk eingerichtet ist.

Es lassen sich insbesondere Feldgeräte, welche mit Adressen versehen sind, die Blockketten-Identifizierungsdaten entsprechen können, als Teilnehmer betrachten. Solche Feldgeräte können Sensordaten oder Steuerdaten erzeugen, welche mit Hilfe der Knoten-Einrichtungen verteilt abgespeichert werden. Da lediglich signierte Blockketten-Identifizierungsdaten zur Durchführung von Transaktionen verwendet werden, kann die Sicherheit von derartigen Industrie-Automatisierungsnetzwerken verbessert werden. Die Feldgeräte können auch selbst Knoten-Einrichtungen in dem Datenbanksystem darstellen.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, wobei üblicherweise keine dafür speziell eingerichtete Infrastruktur und Vertrauensbeziehungen eingerichtet wird. Ein durch eine Blockchain geschützter Transaktionsdatensatz (oder kurz Transaktion) umfasst z. B. Programmcode, der auch als sogenannter "Smart Contract" bezeichnet werden kann.

Die jeweilige Einheit, zum Beispiel ein Knoten, eine Recheneinheit oder Steuerungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer oder mehrerer programmgesteuerten Einrichtungen die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "Bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten (sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transaktionen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere für einen jeweiligen Datenblock des verteilten Datenbanksystems unter Zuhilfenahme des vorhergehenden Datenblocks des verteilten Datenbanksystems ermittelt wird oder oder auf einen solchen referenziert wird (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktion abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart-Contract realisiert. Beispielsweise können im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z.B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart-Contract" kann im Zusammenhang mit der Erfindung beispielsweise ein ausführbarer Programmcode verstanden werden [4][5] (siehe insbesondere Definition "Programmcode"). Der Smart-Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart-Contract auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein Distributed Ledger, ein verteiltes Speichersystem, ein Distributed Ledger Technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Es können auch beispielsweise unterschiedliche Implementierungen einer Blockkette oder eines DLTS verwendet werden.Es kommt z. B. eine Blockkette oder ein System auf Basis der DLT, das mit einem Directed Acylic Graph (DAG), kryptographischen Puzzles, Hashgraphen oder einer Kombination aus den genannten Implementierungsvarianten [6][7] arbeitet. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Es sind insbesondere Proof-of-Stake, Proof-of-Authority oder Proof-of-State Varianten neben der Proof-of-Work-Implementierung zur Transaktionsvalidierung bekannt. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei der Zeit ist. Durch den eindeutigen, azyklischen Verlauf der Kanten wird die zeitliche Aufeinanderfolge der beteiligten Transaktionen eindeutig und beweissicher festgelegt. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blockkette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die als zuverlässige Datenquellen gelten. Die von als "Blockketten-Orakel" geltenden Knoten erhaltenen Daten werden beispielsweise als richtig oder nicht manipuliert angesehen, weil solche Knoten über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Blockketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blockkette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of Computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016 [8] Blockchain Oracles https://blockchainhub.net/blockchainoracles/

Die für das vorgeschlagene verteilte Datenbanksystem beschriebenen Ausführungsformen und Merkmale gelten für das vorgeschlagene Verfahren zum Betreiben eines verteilten Datenbanksystems entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von Ausführungsformen unter Bezugnahme auf die beigelegten Figuren näher erläutert.
- Fig. 1: zeigt eine schematische Darstellung einer Ausführungsform eines Industrieautomatisierungsnetzwerks mit einem verteilten Datenbanksystem;
- Fig. 2: zeigt schematisch eine ausführungsform einer Blockkette;
- Fig. 3: zeigt ein Ablaufdiagramm für ein Verfahren zum Betreiben einer Blockkette; und
- Fig. 4: zeigt ein Ablaufdiagramm für ein Verfahren zum Bestätigen von Transaktionen in einer Blockkette.

In den Figuren sind gleiche oder funktionsgleiche Elemente mit denselben Bezugszeichen versehen worden, sofern nichts anderes angegeben ist.

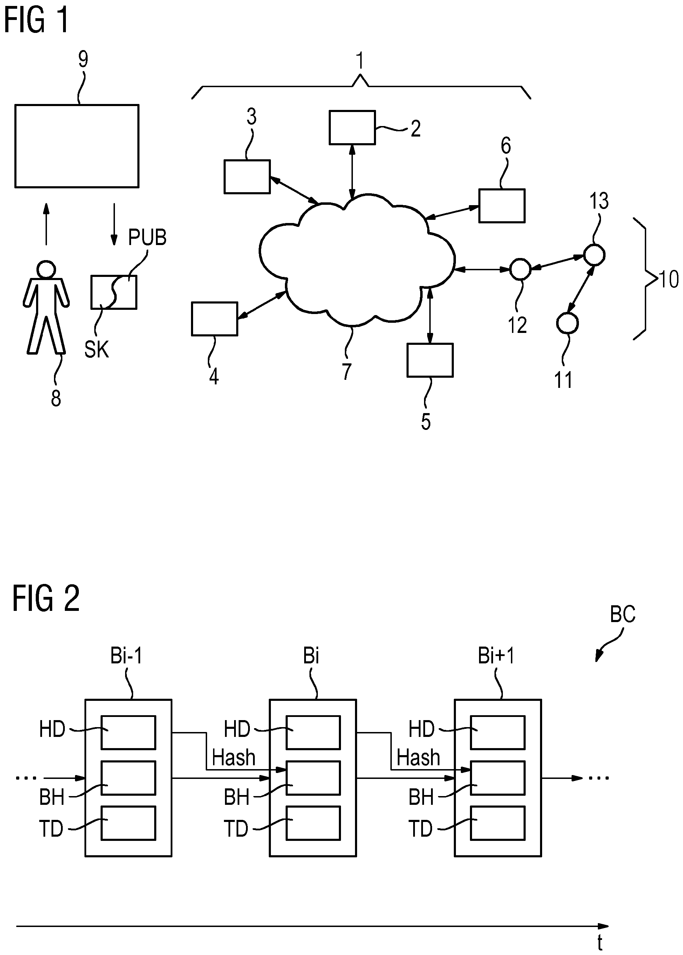

Die Fig. 1 zeigt eine schematische Darstellung einer Ausführungsform eines Industrie-Automatisierungsnetzwerkes, bei dem ein verteiltes Datenbanksystem eingesetzt wird. Dazu ist in der Fig. 1 ein verteiltes Datenbanksystem in der Art einer Blockkette 1 dargestellt, welche in der Fig. 2 näher illustriert ist. Das verteilte Datenbanksystem 1 umfasst dabei miteinander vernetzte Knoten-Einrichtungen 2 - 6.

Die Knoten-Einrichtungen sind an ein Netzwerk 7 gekoppelt und können grundsätzlich Daten miteinander austauschen. Als Knoten-Einrichtungen 2 - 6 kommen beispielsweise Rechner mit Blockketten-Clients oder auch Feldgeräte sowie mobile Endgeräte in Frage. In dem dargestellten Ausführungsbeispiel können beispielsweise Sensordaten, die von Feldgeräten 11, 12, 13 eines Industrie-Automatisierungsnetzwerks 10 erzeugt werden, abgespeichert werden. Das Abspeichern erfolgt in der Art von Transaktionen zwischen Teilnehmern. Beispielsweise kann eine Transaktion für einen Teilnehmer, beispielsweise eine Sensoreinrichtung 11, darin bestehen, einen Sensorwert zu dokumentieren bzw. abzuspeichern. Unter "Teilnehmer" wird im Folgenden jede Entität verstanden, zu der eine zugewiesene Information innerhalb des verteilten Datenbanksystems eingetragen ist. Analog kann eine Information durch eine Transaktion innerhalb der Blockkette BC abgelegt werden.

In der Fig. 1 ist ein allgemeiner Teilnehmer 8 links dargestellt. Um Transaktionen innerhalb einer Blockkette BC durchzuführen, müssen die Teilnehmer 8 über Blockketten-Identifizierungsdaten BID identifiziert werden. Ein entsprechendes Blockketten-Identifizierungsdatum BID kann z. B. eine Netzwerkadresse sein. Häufig werden auch öffentliche Schlüssel eines Schlüssel-Schloss-Paares als Blockketten-Identifizierungsdatum BID verwendet. Ein Nachteil dieser BIDs, die als Pseudonyme für die eigentlichen Teilnehmer 8 verwendet werden, ist die fehlende Sicherheit über die tatsächliche Zuweisung des BIDs an den gedachten Teilnehmer 8. In der Fig. 2 ist schematisch eine Blockkette BC angedeutet. Bei einer Blockkette BC werden Datenblöcke Bi nacheinander erzeugt, wobei die aufeinanderfolgenden Datenblöcke, welche in der Fig. 1 Bi, Bi+1 und Bi-1 bezeichnet sind, kryptographisch miteinander verknüpft sind. Beispielsweise wird der zeitlich in der Fig. 2 aktuellste Datenblock Bi+1, der - wie auch die übrigen vorhergehenden Datenblöcke Bi und Bi-1 - Header-Daten HD, gehashte Datenblockdaten BH und Transaktionsdaten TD umfasst, mit dem vorhergehenden Datenblock Bi verknüpft, indem ein Hashwert des vorhergehenden Datenblocks Bi eingeschrieben ist. Dies ist in der Fig. 2 jeweils durch die geschwungenen Pfeile mit dem Zusatz "Hash" gekennzeichnet. Bei der Hashwertbildung des jeweils vorhergehenden Datenblock gehen alle Daten - insbesondere die Transaktionshistorie der Blockkette BC - ein, so dass eine Manipulation von Daten, insbesondere von Transaktionsdaten, sehr unwahrscheinlich ist.

Bei der Erzeugung eines neuen Datenblocks, der angefragte Transaktionen zwischen Teilnehmern dokumentieren soll, prüfen die Knoten-Einrichtungen 2 - 6, die Rechnerkapazität zur Verfügung stellen, ob die anstehenden Transaktionen im Widerspruch zur bisherigen Transaktionshistorie stehen oder nicht. Beispielsweise wird eine Transaktion bestätigt, wenn die Mehrheit der Knoten-Einrichtungen die Transaktion im Hinblick auf die Transaktionshistorie als widerspruchsfrei einstufen.

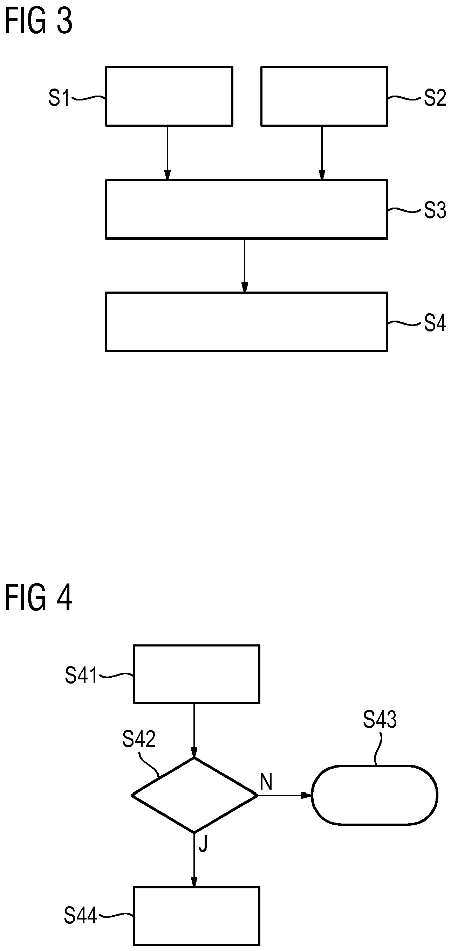

Neben der innerhalb des verteilten Datenbanksystems eingesetzten Blockketten-Identifizierungsdaten BID erfolgt durch Ausgabe eines Zertifikats durch eine Zertifizierungsstelle 9 an einen Teilnehmer 8 eine kryptographische Bindung dieser Blockketten-Identifizierungsdaten BID mit dem eigentlichen Teilnehmer 8. Dies wird dadurch erreicht, dass Transaktionen nur mehr mit digital signierten Blockketten-Identifizierungsdaten DSBID durchgeführt werden. Dies ist schematisch in der Fig. 3 angedeutet, die in einem Betriebsverfahren für das verteilte Datenbanksystem nach Fig. 1 in der Art einer Blockkette nach Fig. 2 ablaufende Verfahrensschritte darstellt.

In den Schritten S1 und S2, die gleichzeitig oder nacheinander in beliebiger Reihenfolge erfolgen können, wird zunächst ein Blockketten-Identifizierungsdatum BID an einen jeweiligen Teilnehmer 8 zugewiesen (Schritt S1). Im Schritt S2 wird ferner ein digitaler Signaturschlüssel SK an den Teilnehmer 8 von der Zertifizierungsstelle 9, beispielsweise einem Trust Center, zugewiesen.

Beim Betrieb der Blockkette BC durch das verteilte Datenbanksystem 1 wird zunächst im Schritt S3 das Blockketten-Identifizierungsdatum digital signiert. Beispielsweise erzeugt die Zertifizierungsstelle 9 ein Paar eines öffentlichen Verifikationsschlüssels PUB und eines privaten kryptographischen Schlüssel SK als Digitalen Signaturschlüssel. Der öffentliche Schlüssel PUB wird zum Beispiel mithilfe eines digitalen Zertifikats dem Teilnehmer 8 zugeordnet.

In der Folge erfolgt das Durchführen von Transaktionen im Schritt S4 auf der Basis der signierten Blockketten-Identifizierungsdaten DSBID. Dadurch wird sichergestellt, dass die Identität des Teilnehmers 8 festgestellt werden kann. Insofern eignet sich das vorgeschlagene Verfahren zum Betreiben der Blockkette, bei der Transaktionen mithilfe digital signierter Identifizierungsdaten DSBID durchgeführt werden, zum Aufbau von sicherheitsrelevanten Datenbanken. Dies kann zum Beispiel Sensor- und Steuerdaten eines Automatisierungsnetzwerks betreffen. Denkbar ist ebenso die Nutzung als digitales Grundbuch oder für den Nachweis von bestimmten Sicherheitseigenschaften von Produkten. Weil die BID kryptographisch an den Teilnehmer, beispielsweise eine reale oder juristische Person, gebunden wird, ist eine rechtssichere Identifizierung möglich.

In der Fig. 4 ist ein Ablaufdiagramm mit Verfahrensschritten gezeigt, welche beim Bestätigen von Transaktionen in der Blockkette BC durchgeführt werden können.

Im Schritt S41 wird die Durchführung von Transaktionen angefragt. Unter einer "Transaktion" kann beispielsweise eine Änderung eines Datenbankeintrags verstanden werden.

Es wird nun im Schritt S42 geprüft, ob die bei den angefragten Transaktionen beteiligten Blockketten-Identifizierungsdaten BID digital signiert sind. Falls dies nicht der Fall ist (N), wird im Schritt S43 die Bestätigung der Transaktion abgebrochen.

Sofern das Blockketten-Identifizierungsdatum BID digital signiert ist (J) und insofern ein digital signiertes Blockketten-Identifizierungsdatum DSBID darstellt, wird im Schritt S44 die Transaktion oder Transaktionen unter Berücksichtigung des eingesetzten Blockketten-Algorithmus bestätigt. Dadurch wird erreicht, dass Knoten-Einrichtungen 2 - 6 lediglich Transaktionen zwischen Teilnehmern 8, die signierte Blockketten-Identifizierungsdaten DSBID aufweisen, durchgeführt bzw. dokumentiert werden.

Bei den vorgeschlagenen Verfahren zum Betreiben verteilter Datenbanksysteme werden insbesondere die zuvor genannten Aspekte im Hinblick auf Blockketten, wie Smart-Contracts, Prüfsummen und dergleichen berücksichtigt. Obwohl die Erfindung anhand einer einfachen Blockkette erläutert wurde, können die zuvor beschriebenen Varianten von Distributed Ledgers genauso mithilfe von digital signierten Identifizierungsdaten innerhalb des Datenbanksystems betrieben werden. Insgesamt wird die Sicherheit und Zuverlässigkeit von Transaktionen zwischen Teilnehmern verbessert, da eine Identifizierung der Teilnehmer ermöglicht wird.

## Patentansprüche

1. Verfahren zum Betreiben eines verteilten Datenbanksystems (1) mit verteilten Knoten-Einrichtungen (2 - 6) zum Bereitstellen von miteinander verknüpften Datenblöcken (Bi), insbesondere in der Art einer Blockkette (BC), welche Transaktionen zwischen Teilnehmern (8) dokumentieren, wobei Transaktionen (TD) zwischen Teilnehmern (8) mit Hilfe von Blockketten-Identifizierungsdaten (BID) durchgeführt werden, mit den Schritten:
Zuweisen (S1) eines Blockketten-Identifizierungsdatums (BID) an einen Teilnehmer (8);
Zuweisen (S2) eines digitalen Signaturschlüssels (SK) an den Teilnehmer (8);
digitales Signieren (S3) des dem Teilnehmer zugewiesenen Blockketten-Identifizierungsdatums (BID) mit Hilfe des dem Teilnehmer (8) zugewiesenen digitalen Signaturschlüssels (SK) zum Erzeugen eines digital signierten Blockketten-Identifizierungsdatums (DSBID); und
Durchführen von Transaktionen (S4) zwischen Teilnehmern (8) mit Hilfe von digital signierten Blockketten-Identifizierungsdaten (DSBID).

2. Verfahren nach Anspruch 1, wobei ein jeweiliges Blockketten-Identifizierungsdatum (BID) einen Teilnehmer (8) innerhalb der Blockkette (BC) eindeutig identifiziert.

3. Verfahren nach Anspruch 1 oder 2, ferner umfassend:
Bereitstellen einer Zertifizierungsstelle (9) zum Ausgeben von digitalen Signaturschlüsseln (SK) oder digitalen Zertifikaten.

4. Verfahren nach einem der Ansprüche 1 - 3, ferner umfassend:
für mehrere Teilnehmer (8), digitales Signieren (S3) der den jeweiligen Teilnehmern (8) zugewiesenen jeweiligen Blockketten-Identifizierungsdaten (BID) der jeweiligen Teilnehmer (8) unter Anwendung der jeweiligen den Teilnehmern (8) zugewiesenen Signaturschlüsseln (SK).

5. Verfahren nach einem der Ansprüche 1 - 4, ferner umfassend:
Abspeichern von digital signierten Blockketten-Identifizierungsdaten (DSBID) durch die oder in der Blockkette (BC).

6. Verfahren nach einem der Ansprüche 1 - 5, wobei die Blockketten-Identifizierungsdaten (BID) von einem öffentlichen kryptografischen Schlüssel (PK) ableitbar sind.

7. Verfahren nach einem der Ansprüche 1 - 6, wobei das Durchführen von Transaktionen für einen Teilnehmer (T) umfasst:
Prüfen (S42) der digitalen Signatur (SK) des digital signierten Blockketten-Identifizierungsdatums (DSBID) mit Hilfe eines Zertifikats; und
Bestätigen (S44) der Transaktion, falls die digitale Signatur (SK) als gültig erkannt wird, und falls die Transaktion mit einer Transaktionshistorie der Blockkette (BC) als verteiltes Datenbanksystem (1) widerspruchsfrei ist.

8. Verfahren nach einem der Ansprüche 1 - 7, wobei die Blockkette (BC) als Proof-of-Work-Blockkette betrieben wird.

9. Verteiltes Datenbanksystem (1) mit mehreren Knoten-Einrichtungen (2 - 6) zum Bereitstellen von miteinander verknüpften Datenblöcken (Bi), insbesondere in der Art einer Blockkette (BC), wobei jede Knoten-Einrichtung (2 - 6) eingerichtet ist, gemäß einem vorgegebenen Blockkettenalgorithmus Transaktionen zwischen Teilnehmern (8) zu dokumentieren, wobei der Blockkettenalgorithmus die Durchführung eines Verfahrens nach einem der Ansprüche 1 - 8 durch die Knoten-Einrichtungen (2 - 6) veranlasst.

10. Industrie-Automatisierungsnetzwerk (10) mit einem verteilten Datenbanksystem (1) nach Anspruch 9 zum Dokumentieren und Steuern von Transaktionen für Feldgeräte (11 - 13).
